# EUROPEAN PATENT APPLICATION

(11) **EP 4 701 126 A1**
(43) Date of publication of application: **25.02.2026**
(21) Application number: 24195399.1
(22) Date of filing: 20.08.2024
(51) Int. Cl.: H04L 9/08, H04L 9/32

(54) **METHOD OF GENERATING A CRYPTOGRAPHIC KEY TO IDENTIFY AN ELECTRICAL SYSTEM, METHOD OF IDENTIFYING AN ELECTRICAL SYSTEM BY MEANS OF A CRYPTOGRAPHIC KEY, A CONTROL DEVICE, A COMPUTER PROGRAM PRODUCT AND A COMPUTER-READABLE STORAGE MEDIUM**

(71) Applicant: Siemens Aktiengesellschaft, 80333 München (DE)
(72) Inventor: Spinnler, Christian, 91052 Erlangen (DE)
(74) Representative: Siemens Patent Attorneys

(57) **Abstract**

The invention relates to a method of generating a cryptographic key (34) to identify an electrical system (14), the electrical system (14) comprising electrical devices (16) that are interconnected by electrical connections (18), the method comprising the following steps. Providing a predefined analogue electrical challenge signal (30) to the electrical system (14), for a predefined excitation time; Recording an analogue electrical response signal (32) of the electrical system (14); converting the analogue electrical response signal (32) to a digitized electrical response signal; Extracting predefined and real-valued features of the response time frame of the digitized electrical response signal; Mapping a binary feature vector to a feature set; and generating the cryptographic key (34) associated with the feature set of the electrical system (14).

## Description

Method of generating a cryptographic key to identify an electrical system, method of identifying an electrical system by means of a cryptographic key, a control device, a computer program product and a computer-readable storage medium

The present invention relates to a method of generating a cryptographic key to identify an electrical system, a method of identifying an electrical system by means of a cryptographic key, a control device configured to perform a method, a computer program and a memory.

Identification of specific electrical devices is based on Physical Unclonable Functions (PUF), which provide unique fingerprints of the specific devices. The Physical Unclonable Function is a physical characteristic or property that is inherent and unique to every electrical device. PUFs are based on random variations in a manufacturing process, which make each device slightly different from every other device, even if they are of the same type and model. These variations may be observed and measured in various physical phenomena such as delay times, threshold voltages, or current leakage.

The unique fingerprint of the device provided by the PUF is caused by these manufacturing variations and cannot be easily copied, cloned, or predicted. This property makes PUFs an attractive solution for applications that require secure authentication, key generation, or secret storage, such as cryptographic systems, identification tags, and tamper-proof devices. PUFs can be implemented in different ways, depending on the physical principle and the application requirements. Some examples of PUF types include static random access memory PUFs (SRAM-PUFs), ring oscillator PUFs, and arbiter PUFs.

Common hardware security mechanisms for hardware fingerprinting, based on the Physical Unclonable Functions (PUFs), are usually bound to a single entity of a system, that may comprise many devices. For the system configured as a group of devices, there is no suitable solution that is based on the properties of the devices in the system and therefore provides a fingerprint that is unique to the system and therefore suitable for identifying the unique system.

It is possible to use multiple PUFs from different devices in the system. However, most devices do not have a PUF structure implemented or accessible from an external device, as it is intrinsic to the device, and can therefore not be accessed by an external entity, such as a microcontroller who wants to verify the authenticity of a component or assembly.

To allow an identification of printed circuit boards, an approach called NotchPUF is suggested. NotchPUF is described in M. Martin et al. 2020 (M. Martin and J. Plusquellic, "NotchPUF: Printed Circuit Board PUF Based on Microstrip Notch Filter," Cryptography, vol. 4, no. 2, Art. no. 2, Jun. 2020, doi: 10.3390/cryptography4020011.) NotchPUF leverages board variations in a manufactured printed circuit board to generate unique and stable identifiers for each printed circuit board. A NotchPUF structure is provided on the printed circuit board. The NotchPUF structure comprises three notch filter structures connected in series with a single copper trace used as a source of randomness. However, this kind of PUF structure needs to be explicitly brought on the printed circuit board.

Other approaches that are similar, focus on anomaly detection in times data. Possible data sources are the current profile of a device or communication bus signal. An approach by M. Ronkin et al. 2023 (M. Ronkin and D. Bykhovsky, "Passive Fingerprinting of Same-Model Electrical Devices by Current Consumption," Sensors, vol. 23, no. 1, Art. no. 1, Jan. 2023, doi: gs 10.3390/s23010533.) exploits microscopic deviations in current consumed from an electrical network by devices with a same software and hardware. These deviations arise due to small hardware discrepancies that exist between seemingly identical devices, resulting in slight variations in the current consumed. By analyzing these variations, it becomes possible to distinguish between different devices of the same model.

N. Gilboa-Markevich et al. 2020 (N. Gilboa-Markevich and A. Wool, "Hardware Fingerprinting for the ARINC 429 Avionic Bus," in Computer Security - ESORICS 2020, vol. 12309, L. Chen, N. Li, K. Liang, and S. Schneider, Eds., in Lecture Notes in Computer Science, vol. 12309. , Cham: Springer International Publishing, 2020, pp. 42-62. doi: 10.1007/978-3-030-59013-0_3) proposes a training of a model to be used as a fingerprint. The fingerprint is generated by recording possible words that a transmitter LRU (Line Replaceable Unit) might transmit on an ARINC 429 avionic bus. During a training period, the system samples the bus and learns the characteristics of the transmitter LRU's signals. This is based on an observation that changes in hardware, such as replacing a transmitter or receiver with a rogue one, modify an electric signal of a transmission. The system relies on these analogue properties to distinguish between different devices and detect any unauthorized changes to the bus. This approach requires performing training of a model, thus, providing correct and good quality training data for a special use case.

It is an object of the present invention to provide a solution for an identification of an electrical system comprising a plurality of electrical devices.

This objective is achieved by the respective subject matter of the independent claims. Further implementations and preferred embodiments are subject matter of the dependent claims.

A first aspect of the present invention relates to a method of generating a cryptographic key for identifying an electrical system. The electrical system comprises electrical devices interconnected by electrical connections. In other words, the method is used to generate the fingerprint for identifying the unique electrical system. The electrical system includes the electrical devices. The electrical devices are connected by the electrical connections. The electrical devices involved may be of known types, although each unique device may have specific variations. The method is structured in such a way that the differences between the unique electrical devices and the unique electrical connections are used to enable the identification of the specific electrical system. The cryptographic key may be used as a fingerprint to identify the respective electrical system.

The method comprises the following steps performed by a control device. In a first step, a predefined analogue electrical challenge signal is applied to the electrical system. The predefined analogue electrical challenge signal is applied for a predefined excitation time. The predefined analogue electrical challenge signal may be any signal, for example a sinusoidal signal of a voltage. The predefined analogue electrical challenge signal may be applied at an input terminal of the electrical system. The predefined analogue electrical challenge signal may describe a variation of a voltage provided at the input terminal of the electrical system by the control device.

The next step is to record an analogue electrical response signal of the electrical system, which is a response of the electrical devices and electrical connections of the electrical system to the predefined analogue electrical challenge signal. In other words, the analogue electrical response signal is recorded by the control device. The control device may receive the analogue electrical response signal at an output terminal of the electrical system. The analogue electrical challenge signal is a response of the electrical system to the applied predefined analogue electrical challenge signal. The response of the electrical system depends on the unique characteristics of the electrical system and therefore provides a unique analogue electrical response signal.

In the next step, the analogue electrical response signal is converted into a digitised electrical response signal. In other words, the analogue electrical response signal is digitised by the control device. The digitisation may be performed by an analogue-to-digital converter.

The next step is to identify a predefined response time frame of the digitised electrical response signal. In other words, the time frame associated with the predefined excitation time is identified in the digitised electrical response signal by the control device.

A next step comprises an extraction of predefined features of the digitized electrical response signal in the time frame using a feature extractor from the domain of time series classification. The step further comprises generating an real-valued feature vector comprising the extracted predefined and real-valued features. In the feature extraction procedure, features are extracted by transforming the digitised electrical response signal in the time frame using a multitude of convolutional kernels. The digitised electrical response signal in the time frame is convolved with the convolutional kernels, which may differ in terms of their length, weights, bias, dilation, and padding. A resulting convolution output may undergo a single or multiple pooling operations like global max pooling and proportion of positive values (PPV) pooling to produce at least one features per random convolutional kernel per digitised electrical response signal in the time frame.

A next step comprises converting the real-valued feature vector comprising the extracted features to a binary feature vector of the electrical system using a feature transformation procedure. In the feature transformation procedure, the real-valued feature vector, comprising the features is converted into the integer-valued feature vector through quantization. In a further step of the feature transformation procedure the integer-valued feature vector is mapped to the binary feature vector through binarization. The binary feature vector is mapped to a feature set which is a unique identifier of the system. In its simplest implementation the feature set is a direct mapping of the binary feature vector.

A next step comprises generating a cryptographic key which can be associated with the feature set of the electrical system or generated by a true random number generator or both. The key can be used to identify the electrical system.

According to a further embodiment, the cryptographic key is generated according to a helper data scheme. A helper data scheme is a cryptographic technique used to securely store and retrieve sensitive data, such as cryptographic keys in an electrical system from noisy input data, in a way that is resistant to errors or variations in the digitized electrical response signal in the time frame. The helper data scheme comprises a generation of a data object that hides the cryptographic key which can only be accessed with the unique feature set of an electrical system.

The helper data scheme can be implemented as fuzzy extractor, fuzzy vault or fuzzy commitment scheme. The helper data is generated during the first enrolment of the electrical system from an initial feature set. During operation, the helper data scheme reveals the hidden cryptographic key if a newly generated feature set is close enough to the initial feature set such that errors can be decoded by the respective helper data scheme.

The embodiment has the advantage that the method is suitable for the feature sets, as the feature set of the unique electrical system may vary between measurements.

A second aspect of the present invention is related to a method of identifying the electrical system using a cryptographic key. The electrical system comprises electrical components that are interconnected by electrical connections. The method comprises the following steps performed by a control device.

The method comprises providing a predefined analogue electrical challenge signal to the electrical system, for a predefined excitation time and recording an analogue electrical response signal of the electrical system. The analogue electrical response signal is a response of the electrical devices and the electrical connections of the electrical system to the predefined analogue electrical challenge signal. The method comprises converting the analogue electrical response signal to a digitized electrical response signal and identifying a predefined response time frame of the digitized electrical response signal. The method comprises extracting predefined features of the response time frame of the digitized electrical response signal using a feature extractor from the domain of time series classification and generating a real-valued feature vector comprising the extracted predefined and real-valued features. The method comprises converting the real-valued feature vector to a binary feature vector of the electrical system using a feature transformation procedure. The method comprises mapping the binary feature vector to a feature set.

The method comprises reconstructing a cryptographic key associated with the feature set of the electrical system and verifying the reconstructed cryptographic key with the cryptographic key associated with the feature set of the electrical system.

The method comprises, upon successful verification, identifying the electrical system with the electrical system of the cryptographic key.

A third aspect of the invention is related to a control device configured to perform the method of the first aspect of the invention and/or the method of the second aspect of the invention.

The control device is configured to providing a predefined analogue electrical challenge signal to the electrical system, for a predefined excitation time and to record an analogue electrical response signal of the electrical system, which is a response of the electrical devices and the electrical connections of the electrical system to the predefined analogue electrical challenge signal. The control device is configured to convert the analogue electrical response signal to a digitized electrical response signal and to identify a predefined response time frame of the digitized electrical response signal. The control device is configured to extract predefined and real-valued features of the response time frame of the digitized electrical response signal using a feature extractor from the domain of time series classification procedure and generating a real-valued feature vector comprising the extracted predefined and real-valued features. The control device is configured to convert the real-valued feature vector to binary feature vector of the electrical system using a feature transformation procedure. The control device is configured to map the binary feature vector to a feature set.

According to a first alternative, the control device is configured to generate a cryptographic key associated with the feature set of the electrical system or generated by a true random number generator or both.

According to a second alternative, the control device is configured to reconstruct the cryptographic key associated with the feature set of the electrical system. According to the second alternative, the control device is configured to verify the reconstructed cryptographic key with the cryptographic key associated with the feature set of the electrical system According to a second alternative, the control device is configured to identify the electrical system with the electrical system of the cryptographic key upon successful verification
.A fourth aspect of the invention is related to a computer program product comprising program code for performing a method according to the first aspect of the present invention and/or according to the second aspect of the present invention. The computer program product may also be regarded as a computer program.

A fifth aspect of the invention is related to a computer-readable storage medium comprising at least the computer program product according to the fourth aspect.

Independent of the grammatical term usage, individuals with male, female or other gender identities are included within the term.

The control device may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
FIG 1 shows a schematic illustration of a method to generate a fingerprint to identify an electrical system;
FIG 2 shows a schematic illustration of a method to identify an electrical system; and
FIG 3 is a schematic illustration of a device configured to generate a fingerprint to identify an electrical system and/or to identify an electrical system based on a fingerprint.

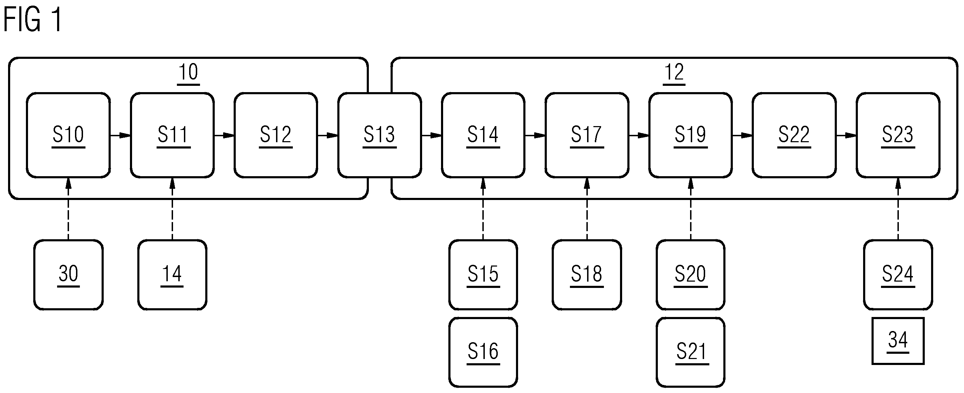

FIG 1 shows a schematic illustration of a method to generate a fingerprint to identify an electrical system.

The proposed solution may create a unique identifier for an electrical system 14, similar to a Physically Unclonable Function (PUF), by utilizing the manufacturing variances present in multiple components and the Printed Circuit Board (PCB). These variances may comprise parasitic values of the components' impedances, such as resistance, inductance, and capacitance. These values differ between electrical devices 16 and remain constant throughout the electrical device 16's lifetime, causing each electrical system 14 to have a unique electrical structure.

The electrical system 14 may comprise a printed circuit board, wherein electrical devices 16 may be attached to the printed circuit board that may be interconnected by electrical connections 18. A control device 20 may be used to perform the following steps.

Steps S10 to S12 may be performed in an analogue domain 10. Steps S14 to S24 may be performed in a digital domain 12.

The method may comprise a provision of a predefined analogue electrical challenge signal 30 to the electrical system 14 S10, for a predefined excitation time. In other words, to generate the unique identifier, the predefined analogue electrical challenge signal 30 may be applied to the electrical system 14 by the control device 20. This predefined analogue electrical challenge signal 30 may be any arbitrary electrical signal, like a step response, sinusoid, or saw-tooth wave.

The predefined analogue electrical challenge signal 30 applied to the electrical system 14 may be affected by the manufacturing variances of the electrical devices 16 and the interconnections S11. The manufacturing variations may be unique to each electrical system 14. As a result, the influence of the predefined analogue electrical challenge signal is individual for each electrical system 14.

A next step S12 comprises a recording of an analogue electrical response signal 32 of the electrical system 14 by the control device 20. The analogue electrical response signal 32 may be a response of the electrical devices 16 and the electrical connections 18 of the electrical system 14 to the predefined analogue electrical challenge signal 30. This response, which may takes a form of a time series signal, may then be recorded using an analogue to digital converter (ADC) of the control device 20 connected to a computer or microcontroller of the control device 20 for further processing and analysis.

In a step S13, the analogue electrical response signal 32 received from the electrical system 14 may be converted to a digitised electrical response signal by the analogue to digital converter (ADC) of the control device 20.

In a step S14, pre-processing may be performed on the digitized electrical response signal. The preprocessing may comprise a noise reduction procedure S15 to remove or reduce noise in the digitized electrical response signal. The pre-processing may further comprise identification of a predefined response time frame in a windowing procedure S16. In the windowing procedure S16, the digitized electrical response signal may be limited to the predefined time frame.

A next step S17 may comprise a feature extraction procedure to extract predefined features of the digital electrical response signal in the predefined time frame. The feature extraction may be performed using a feature extractor from the domain of time series classification S18 based on a multitude of convolution kernels.

A possible algorithm may be described in A. Dempster et al. 2021 (A. Dempster, D. F. Schmidt, and G. I. Webb, "MINIROCKET: A Very Fast (Almost) Deterministic Transform for Time Series Classification," in Proceedings of the 27th ACM SIGKDD Conference on Knowledge Discovery & Data Mining, Aug. 2021, pp. 248-257. doi: 10.1145/3447548.3467231.).

A next step S19 may comprise a feature transformation procedure to convert the real-valued feature vector to a binary feature vector of the electrical system 14. The feature transformation procedure may involve several steps to convert an real-valued feature vector into a binary feature vector.

First, the real-valued feature vector may be quantized into a smaller set of intervals in a step S20. Each interval corresponds to a range of values that the original feature vector entries can take. The number of intervals and their specific ranges depend on the desired properties of the transformed feature vector. For example, having more intervals can lead to better separation between different features but might also require a longer binary vector.

A next step S21 may comprise a binarisation. After quantizing the real-valued feature vector into intervals, each entry may be converted into a binary value. This conversion may be performed using a specific method or scheme, such as Direct Binary Representation (DBR) or other methods. The binarization process may result in a binary feature vector where each element has a value of 0 or 1.

A next step S22 may comprise a mapping of the binary feature vector to a feature set. The feature set may consists of indexes corresponding to the positions of the binary feature vector.

The next step S23 may comprise a generation of cryptographic primitives using the generated data to provide a key 34 for the electrical system 14 based on the feature set. The end result may be a unique binary identifier which can be further used with cryptographic primitives such as fuzzy extractors or other auxiliary data algorithms to generate a stable key 34 for the device based on the analogue measurements.

The step S24 may include key 34 binding. In key 34 binding, a public bijection may be applied to the integer set, and the resulting integer set is projected onto a secret polynomial defined by a key 34. The resulting integer set projected onto the secret polynomial and a hash of the key 34 are stored in a vault record.

This key 34 can then be used in a remote attestation procedure, e.g. to derive a private and public key 34 pair for signature-based algorithms. A similar approach has been proposed for biometric authentication for facial data in C. Rathgeb et al. 2022 (C. Rathgeb, J. Merkle, J. Scholz, B. Tams, and V. Nesterowicz, "Deep face fuzzy vault: Implementation and performance", Computers & Security, vol. 113, p. 102539, Feb. 2022, doi: 10.1 016/j. cose.2021.102539).

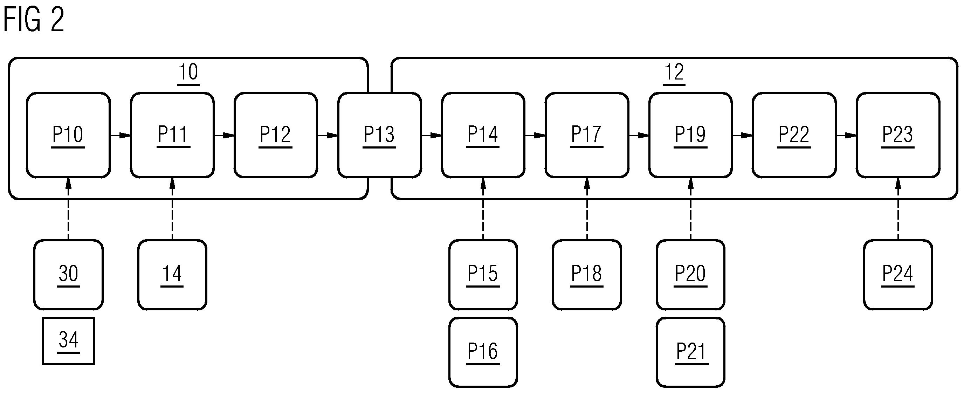

FIG 2 shows a schematic illustration of a method to identify an electrical system.

The method may be performed on an electrical system 14 to verify whether the electrical system 14 is the electrical system 14 of a provided key 34. The steps may be performed by a control device 20.

Steps P10 to P12 may be performed in an analogue domain 10. Steps P14 to P24 may be performed in a digital domain 12.

Steps P10 to P22 may correspond to steps S10 to S22. Therefore a feature set of the electrical system 14 may be provided.

P23 may comprise a key 34 retrieval stage, wherein a public bijection is applied to the feature set of the electrical system 14. Based on the resulting integer set, a polynomial reconstruction may be performed.

Finally in a step P24, the retrieved key 34 is validated by comparing its hash value with the stored one. Upon successful validation, the electrical system 14 may be defined as the electrical system 14 of the key 34. The control device 20 may for example release a function.

Unlike other systems, the proposed system incorporates a variety of electrical characteristics and can cover a larger system as a whole. Electrical characteristics of components that are not capable of authentication on their own can be used to prove their authenticity.

Furthermore, the system can process almost any input time series data and create a unique identifier from it. This could be, for example, a system's performance profiles.

The system is based on machine learning concepts, but instead of training a classifier or an anomaly detector, the system can be used without the need for training data. Therefore, there is no need to store a model of the system, nor is there a need to collect training data for the system.

In short, the system is more flexible than other solutions and creates a unique identifier for a variety of electrical components or parts of a device. It has the advantages of modern machine learning anomaly detectors without the need for expensive training data or classifier training.

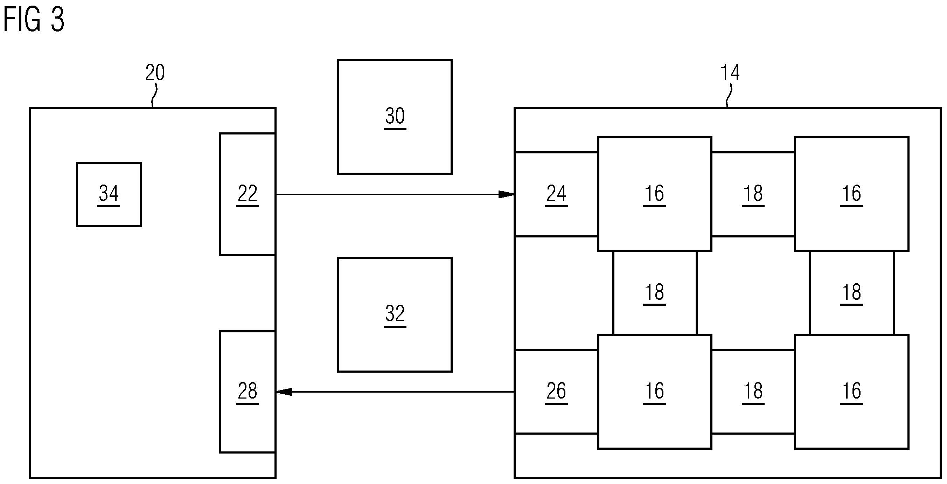

FIG 3 is a schematic illustration of a control device configured to generate a fingerprint to identify an electrical system and/or to identify an electrical system 14 based on a fingerprint.

The control device 20 may comprise an input terminal 28 and an output terminal 22, the control device 20 may be configured to provide an analogue electrical challenge signal 30 at the output terminal 22 of the control device 20 and to provide the analogue electrical challenge signal 30 to an input terminal 24 of the electrical system 14. The control device 20 may comprise the input terminal 28 to receive an analogue electrical response signal 32 in response to the analogue electrical challenge signal 30 from an output terminal 26 of the electrical system 14.

The electrical system 14 may comprise the electrical devices 16, the electrical devices 16 may be interconnected by electrical connections 18. The predefined analogue electrical challenge signal 30 may interact with the electrical devices 16 and the electrical connections 18. The electrical connections 18 and the electrical devices 16 may have specific variations that may be unique to the particular electrical system 14. These variances may affect the analogue electrical challenge signal 30 and may result in a provision of an analogue electrical response signal 32 that may be unique to the electrical system 14. The control device 20 may be configured to generate the fingerprint to identify the electrical system 14. The control device 20 may also be configured to use a fingerprint to identify the electrical system 14.

## Claims

1. Method of generating a cryptographic key (34) to identify an electrical system (14), the electrical system (14) comprising electrical devices (16) that are interconnected by electrical connections (18), the method comprising the following steps:
- providing a predefined analogue electrical challenge signal (30) to the electrical system (14), for a predefined excitation time;
- recording an analogue electrical response signal (32) of the electrical system (14), which is a response of the electrical devices (16) and the electrical connections (18) of the electrical system (14) to the predefined analogue electrical challenge signal (30);
- converting the analogue electrical response signal (32) to a digitized electrical response signal;
- identifying a predefined response time frame of the digitized electrical response signal;
- extracting predefined features of the response time frame of the digitized electrical response signal using a feature extractor from the domain of time series classification and generating a real-valued feature vector comprising the extracted predefined and real-valued features;
- converting the real -valued feature vector to binary feature vector of the electrical system (14) using a feature transformation procedure;
- mapping the binary feature vector to a feature set; and
- generating the cryptographic key (34) associated with the feature set of the electrical system (14).

2. Method according to claim 1, wherein the cryptographic key (34) is generated according to a helper data scheme.

3. Method of identifying an electrical system (14) using a cryptographic key (34), the electrical system (14) comprising electrical devices (16) that are interconnected by electrical connections (18), the method comprising the following steps:
- generating the cryptographic key (34) associated with the feature set of the electrical system (14);
- providing a predefined analogue electrical challenge signal (30) to the electrical system (14), for a predefined excitation time;
- recording an analogue electrical response signal (32) of the electrical system (14), which is a response of the electrical devices (16) and the electrical connections (18) of the electrical system (14) to the predefined analogue electrical challenge signal (30);
- converting the analogue electrical response signal (32) to a digitized electrical response signal;
- identifying a predefined response time frame of the digitized electrical response signal;
- extracting predefined and real-valued features of the response time frame of the digitized electrical response signal using a feature extractor from the domain of time series classification and generating a real-valued feature vector comprising the extracted predefined and real-valued features;
- converting the real-valued feature vector to binary feature vector of the electrical system (14) using a feature transformation procedure;
- mapping the binary feature vector to a feature set; and
- reconstructing a cryptographic key (34) associated with the feature set of the electrical system (14);
- verifying the reconstructed cryptographic key (34) with the cryptographic key (34) associated with the feature set of the electrical system (14); and
- upon successful verification, identify the electrical system (14) with the electrical system (14) of the cryptographic key (34).

4. A control device (20), configured to perform a method of generating a cryptographic key (34) to identify an electrical system (14) according to any one of the preceding claims 1 to 2 and/or configured to perform a method of identifying an electrical system (14) using a fingerprint according to claim 3.

5. A computer program product comprising program code for performing a method according to any one of the preceding claims 1 to 2 and/or for performing a method of controlling a printer device (12) according to claim 3.

6. A computer-readable storage medium comprising at least the computer program product according to claim 5.
